# EUROPEAN PATENT APPLICATION

(11) **EP 3 926 360 A1**
(43) Date of publication of application: **22.12.2021**
(21) Application number: 20180636.1
(22) Date of filing: 17.06.2020
(51) Int. Cl.: G01S 7/41, G01S 13/08, G01S 13/86, G01S 17/08, G01S 17/86, G01S 17/931, G01S 13/931, G06K 9/00, G06K 9/62, G06N 3/02

(54) **NEURAL NETWORK BASED METHODS AND SYSTEMS FOR OBJECT DETECTION USING CONCATENATED LIDAR, RADAR AND CAMERA DATA SETS**

(71) Applicant: Aptiv Technologies Limited, St. Michael (BB)
(72) Inventor: DERBISZ, Jakub, 30-724 Krakow (PL)
(74) Representative: Manitz Finsterwald Patent- und Rechtsanwaltspartnerschaft mbB

(57) **Abstract**

A computer implemented method for object detection comprises the following steps carried out by computer hardware components: acquiring a plurality of lidar data sets from a lidar sensor; acquiring a plurality of radar data sets from a radar sensor; acquiring at least one image from a camera; determining concatenated data based on casting the plurality of lidar data sets and the plurality of radar data sets to the at least one image; and detecting an object based on the concatenated data.

## Description

### FIELD

The present disclosure relates to methods and systems for object detection, for example for bounding box detection.

### BACKGROUND

Object detection is an essential pre-requisite for various tasks, in particular in autonomously driving vehicles.

Accordingly, there is a need to provide efficient and reliable object detection.

### SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for object detection, the method comprising the following steps performed (in other words: carried out) by computer hardware components: acquiring a plurality of lidar data sets from a lidar sensor; acquiring a plurality of radar data sets from a radar sensor; acquiring at least one image from a camera; determining concatenated data based on casting (in other words: projecting) the plurality of lidar data sets and the plurality of radar data sets to the at least one image; and detecting an object based on the concatenated data. Concatenating data may include enhancing sensor data from several prior sensor readings into one frame subsequently casted onto single camera frame.

As used herein, "casting" and "projecting" (and likewise "cast" and "projection") may be used interchangeably. For example, casting points onto a 2D camera space may be understood as projecting the points onto the camera plane (of the 2D camera space). For example, the projecting may be carried out using a pinhole camera model.

According to another aspect, the computer implemented method further comprises the following step carried out by the computer hardware components: determining a plurality of camera residual blocks. Residual blocks may be part of the artificial neural network which transforms data aiming to obtain features applicable in prediction, i.e., layers of neural network with skip connections as introduced in ResNet architecture. Here, the block includes a 2D convolutional layer, batch normalization, and a leaky ReLu activation function.

According to another aspect, the camera data may be processed using a first artificial neural network. The first artificial neural network may be a ResNet type convolutional neural network architecture transforming camera data.

According to another aspect, the casting comprises aligning a plurality of sweeps of the lidar data sets. For example, several prior lidar sweeps are aligned to the most current sweep to enhance lidar points number, as if it was a single sweep with more dense lidar. Alignment is carried out as in nuScenes open API method that returns a point cloud that aggregates multiple sweeps. A pre-determined number of previous frames (for example 10 previous frames) may be mapped to a single reference frame, which may be the "current" (or a "current frame") in this case. Homogeneous transformations matrices considering differences in translation and rotation of ego car may be used to align a previous frame with the reference frame.

According to another aspect, the computer implemented method further comprises the following step carried out by the computer hardware components: carrying out linear depth completion of the lidar data sets. Linear depth completion may be used to further enhance lidar points density. It is performed on already projected lidar points onto 2D camera plane. Afterwards each 2D plane point has depth linearly estimated from the lidar depths from nearest points. Such depth completion is quick and allows to obtain "depth images", which even though coming only from lidar allow to utilize for example convolutional neural networks used with images processing.

According to another aspect, the computer implemented method further comprises the following step carried out by the computer hardware components: determining a plurality of lidar residual blocks based on the linear depth completed lidar data. Having "depth images", the same type of residual blocks as in case of camera data may be utilized.

According to another aspect, the lidar data sets are processed using a second artificial neural network. The second artificial neural network may be a ResNet type artificial neural network architecture, as for camera, transforming "depth images".

According to another aspect, the casting comprises aligning a plurality of sweeps of the plurality of radar data sets. The aligning of radar data sets may be similar to the aligning of lidar data sets.

According to another aspect, the computer implemented method further comprises the following step carried out by the computer hardware components: determining a plurality of radar residual blocks. The residual blocks may be similar as in the case of camera data.

According to another aspect, the radar data is processed using a third artificial neural network. The third artificial neural network may be a ResNet type convolutional neural network architecture, as for camera, transforming "velocity images".

According to another aspect, the computer implemented method further comprises the following step carried out by the computer hardware components: concatenating the plurality of camera residual blocks, the plurality of lidar residual blocks, and the plurality of radar residual blocks (for example to obtain concatenated data).

With the method according to various aspects, accurate 3d and 2d bounding box detections may be made with the neural network using camera-lidar-radar fused data, where KPI (key performance indicator) metrics of our solution may be tested on nuScenes dataset casting lidar and radar onto front camera, on trained and validation/test sets prepared and consisting of separate scenes.

In another aspect, the present disclosure is directed at a computer system, said computer system comprising a plurality of computer hardware components configured to carry out several or all steps of the computer implemented method described herein. The computer system may be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising a radar sensor, a lidar sensor and a camera, wherein the vehicle is configured to detect objects according to the computer implemented method described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically
- Fig. 1: an illustration of an architecture for camera, lidar and radar fusion for 2d and 3d object detection task according to various embodiments;
- Fig. 2: illustrations of hl view of implementation according to various embodiments of middle fusion and late fusion;
- Fig. 3: an illustration of a scene with various 3d bounding boxes obtained according to various embodiments;
- Fig. 4: a flow diagram illustrating a method for object detection according to various embodiments; and
- Fig. 5: a computer system with a plurality of computer hardware components configured to carry out steps of a computer implemented method for object detection according to various embodiments.

### DETAILED DESCRIPTION

Neural networks may be used in object detection tasks, for example in automotive industry, wherein bounding boxes may be placed around objects belonging to certain classes of interest (such as cars, pedestrians, or traffic signs).

For 2d (two-dimensional) bounding box detection, it may be sufficient to use a single camera. For 3d (three-dimensional) bounding box detection, it may be desired to determine the distance of an object of interest from the ego vehicle. For example a lidar (light detection and ranging) sensor may be used, for example in combination with other sensors. A lidar sensor may directly provide a point cloud in 3d coordinate space. To further increase safety and accuracy of object detection task, the outputs from several sensors may be fused to provide useful information/features of the class of objects to be found.

According to various embodiments, lidar sensor data, radar sensor data, and camera data may be fused together in an efficient way for 2d and 3d object detection tasks, and a neural networks architecture may be provided to make benefits of such a fusion.

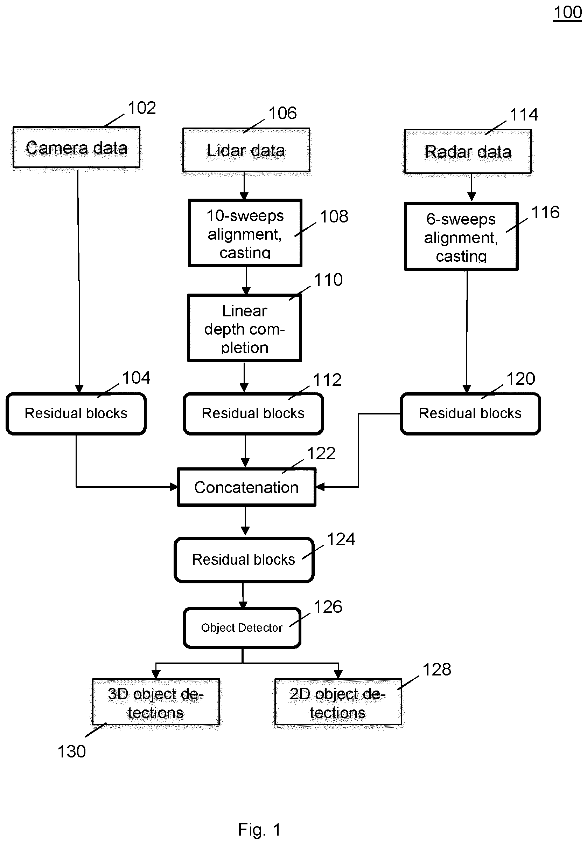

Fig. 1 shows an illustration 100 of a system (in other words: an architecture) for camera, lidar and radar fusion for 2d and 3d object detection task according to various embodiments.

Inputs to the system are several sensor frames, for example from up to 0.5 passed seconds, appropriate prepared, which can be viewed as a W x H x C dimensional input frame (wherein W is the width, H is the height, and C is the number of features, for example comparing to W x H x 3 for RGB (red-green-blue) images), and which may be transformed and used for further processing, for example in an artificial neural network, for example in a convolutional neural network.

Camera data 102 (including camera frames), lidar data 106 (including lidar pointcloud frames), and radar data 114 (including radar frames) may be processed as will be described in the following. All radar and lidar pointcloud frames may be casted onto most recent ('current') camera frame of size W x H. An alignment casting 108 (for example 10-sweeps alignment casting) may be carried out for the lidar data 106. The lidar frames may be linearly depth completed (as illustrated by block 110). An alignment casting 116 (for example 6-sweeps alignment casting) may be carried out for the radar data 114.

For a single frame entry, RGB camera channels and channels from lidar and radar casts from previous sweeps which form C channels in a W x H x C input frame may be used. According to various embodiments, instead of using a single, most current, camera frame, camera frames from previous 0.5 seconds timestamps contributing to C channels may be used. To sum up, the input consists of W x H x 3 for camera (or 3*CO in case one uses CO previous camera frames), W x H x C1 for C1 prepared lidar casts, W x H x C2 for C2 prepared radar casts.

According to various embodiments, an artificial neural network may be used for transforming such inputs to obtain 3d and/or 2d object detections on the output. A SSD (Single Shot MultiBox Detector) like neural network, may be used, which may be able to make 3d bounding boxes detecting objects. For example, yolo V3 and SSD networks may be used, which work on single 2d image input outputting 2d bounding boxes only. According to various embodiments, ground truth labels and underlying architecture may be introduced to be able to infer object distances and sizes (width, length, height) in 3d space, together with yaw-pitch-roll angles of an object.

According to various embodiments, the following labels may be taken: (left, bottom, right, top, center_x, center _y, center_z, width, length, height, q1 , q2, q3, q4), where (left, bottom, right, top) are 2d bounding box coordinates of an object in 2d camera image space. (center_x, center _y, center_z, width, length, height, q1, q2, q3, q4) may be provided in 3d camera coordinate system, and q1,q2,q3,q4 may be quaternions describing yaw-pitch-roll angles.

The network may be divided into three phases related to processing time. In a first phase may consist of three separate subnets of residual blocks 104, 112, 120, transforming the camera data 102, the lidar data 106, and the radar data 114. In a second phase, after the residual blocks 104, 112, 120 are obtained, features extracted this way by each networks may be concatenated (like indicated by block 122) into a single feature frame. The second phase includes a further transformation of joint data using residual blocks. Concatenation in 122 applies to concatenating results from previous 3 residual neural network subnets transforming 1) camera 2) lidar 3) radar. Afterwards in the residual block 124, such "joint" image (which may have 128*3 channels, where there may be 128 channel subnet output) having features from those 3 sensors may further be transformed by a residual network. A third (or last) phase may include outputting class scores and region proposals. Outputting the class scores and region proposals may be similar as in Yolo v3, but the output may be enhanced with 3D part implying the position of an object in 3D coordinates and its rotation; hence, each point of 2D grid together with its associated 2D anchor box receives a probability score indicating probability of existence of an object within such area; then each class of object that the method is predicting receives a score indicating probability of object being of such class. Region proposal corresponding to such 2D grid point may consist of coordinates indicating placement of an object: (left, bottom, right, top, center_x, center_y, center_z, width, length, height, q1, q2, q3, q4). Thus, (left, bottom), (right, top) may imply most probable placement of an object in the image space, (center_x, center_y, center_z, width, length, height, q1, q2, q3, q4) the placement in 3D space, and q coordinates indicate rotation. Detection in form of the labels described above may be included, which may add a 3-dimensional part. An object detector 126 may carry out 2d object detections 128 and 3d object detections 130 based on the residual blocks 124.

Depending on when the first three subnets (for camera data, lidar data, and radar data) are joined, middle fusion or late fusion may be provided as two separate architectures. In case of middle fusion, already joined features may be used when creating 3-scale detections. Details of the late fusion and middle fusion and of the 3-scale detections may be similar to the Yolo v3 architecture. Final predictions may depend on joint results of prediction from 3 different 2D grid granularities ("scales"). In the middle case, after only several residual blocks preparing initially the features separately from camera, lidar and radar, the output may be joined and the rest of the network may work on a "joint image" with features prepared by subnets as in case of standard 3 channel image. In case of late fusion, there may be a flow of 3 subnetworks as if working with separate 3 images (from 3 sensor types) and fuse the networks only before making the final predictions on each granularity scale.

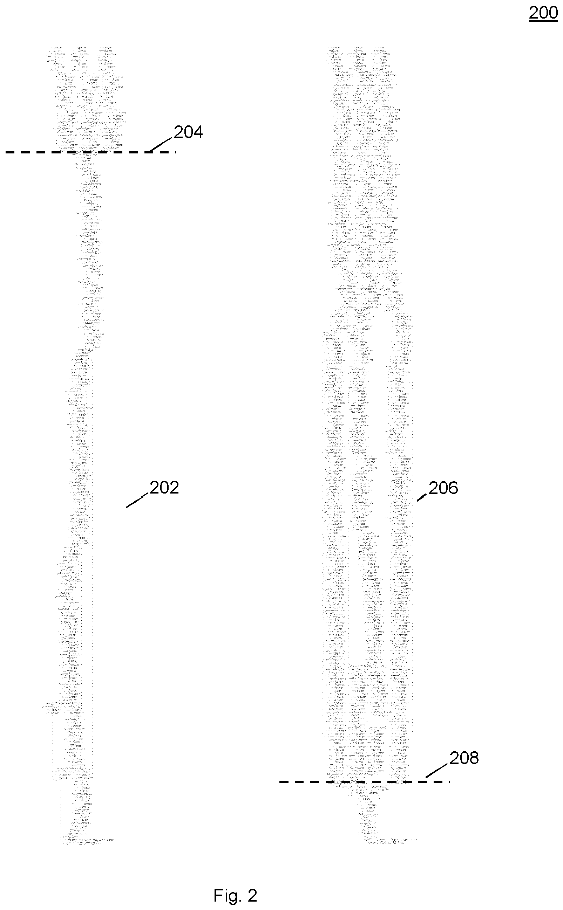

Fig. 2 shows illustrations 200 of hl (hidden layer, or high level) view of implementation according to various embodiments of middle fusion (on the left) and late fusion (on the right). The hl data 202 of the middle fusion may include joint features after a point of processing indicated by a dashed line 204, and the hl data 206 of the late fusion may include joint features after a point of processing indicated by a dashed line 208. hl data is illustrated in a sequence of processing (or time) from top to bottom.

In case of late fusion, all three processing pipelines are performed separately, only concatenating features just before each detections for each scale, with last residual blocks after the join.

According to various embodiments, a loss function may be introduced, using yolo V3 loss and additional weighted L2 distances between 3d coordinates, and quaternion angle loss for learning yaw-pitch-roll.

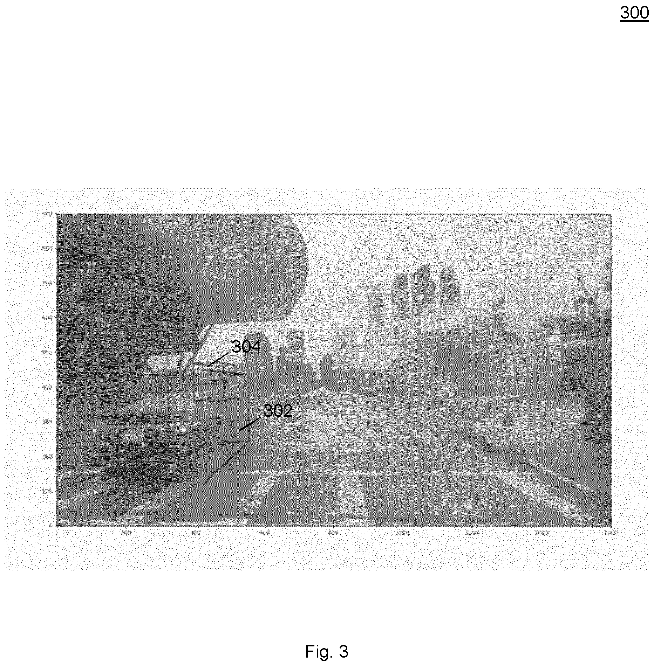

Fig. 3 shows an illustration 300 of a scene with various 3d bounding boxes 302, 304 obtained according to various embodiments.

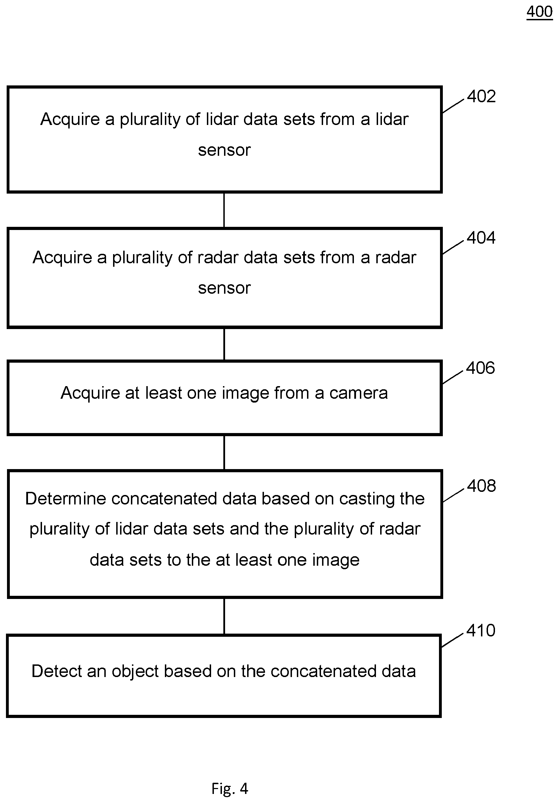

Fig. 4 shows a flow diagram 400 illustrating a method for object detection according to various embodiments. At 402, a plurality of lidar data sets may be acquired from a lidar sensor. At 404, a plurality of radar data sets may be acquired from a radar sensor. At 406, at least one image may be acquired from a camera. At 408, concatenated data may be determined based on casting the plurality of lidar data sets and the plurality of radar data sets to the at least one image. At 410, an object may be detected based on the concatenated data.

According to various embodiments, a plurality of camera residual blocks may be determined.

According to various embodiments, the camera data may be processed using a first artificial neural network.

According to various embodiments, the casting may include aligning a plurality of sweeps of the lidar data sets.

According to various embodiments, out linear depth completion of the lidar data sets may be carried out.

According to various embodiments, a plurality of lidar residual blocks may be determined based on the linear depth completed lidar data.

According to various embodiments, the lidar data sets may be processed using a second artificial neural network.

According to various embodiments, the casting may include aligning a plurality of sweeps of the plurality of radar data sets.

According to various embodiments, a plurality of radar residual blocks may be determined.

According to various embodiments, the radar data may be processed using a third artificial neural network.

According to various embodiments, the plurality of camera residual blocks, the plurality of lidar residual blocks, and the plurality of radar residual blocks may be concatenated.

Each of the steps 402, 404, 406, 408, 410 and the further steps described above may be performed by computer hardware components.

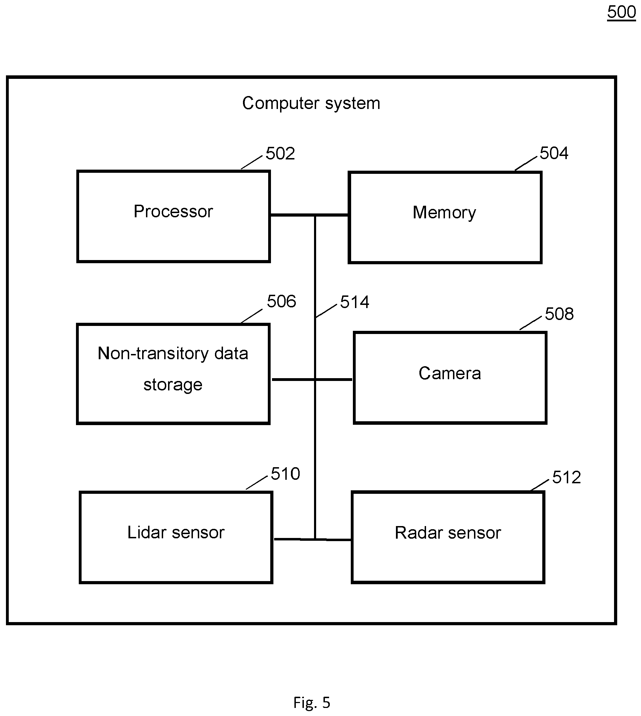

Fig. 5 shows a computer system 500 with a plurality of computer hardware components configured to carry out steps of a computer implemented method for object detection according to various embodiments. The computer system 500 may include a processor 502, a memory 504, and a non-transitory data storage 506. At least one camera 508, at least one lidar sensor 510, and at least one radar sensor 512 may be provided as part of the computer system 500 (like illustrated in Fig. 5), or may be provided external to the computer system 500.

The processor 502 may carry out instructions provided in the memory 404. The non-transitory data storage 506 may store a computer program, including the instructions that may be transferred to the memory 504 and then executed by the processor 502.

The processor 502, the memory 504, and the non-transitory data storage 506 may be coupled with each other, e.g. via an electrical connection 514, such as e.g. a cable or a computer bus or via any other suitable electrical connection to exchange electrical signals. The at least one camera 508, the at least one lidar sensor 510, and/or the at least one radar sensor 512 may be coupled to the computer system 500, for example via an external interface, or may be provided as parts of the computer system (in other words: internal to the computer system, for example coupled via the electrical connection 514).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

### Reference numeral list

- 100: an illustration of an architecture for camera, lidar and radar fusion for 2d and 3d object detection task according to various embodiments
- 102: camera data
- 104: residual blocks
- 106: lidar data
- 108: alignment casting
- 110: linear depth completion
- 112: residual blocks
- 114: radar data
- 116: alignment casting
- 120: residual blocks
- 122: concatenation
- 124: residual blocks
- 126: object detector
- 128: 2d object detection
- 130: 3d object detection

- 200: illustrations of hl view of implementation according to various embodiments of middle fusion and late fusion
- 202: hl data
- 204: dashed line
- 206: hl data
- 208: dashed line

- 300: illustration of a scene with various 3d bounding boxes obtained according to various embodiments
- 302: 3d bounding box
- 304: 3d bounding box
- 400: flow diagram illustrating a method for object detection according to various embodiments
- 402: step of acquiring a plurality of lidar data sets from a lidar sensor
- 404: step of acquiring a plurality of radar data sets from a radar sensor
- 406: step of acquiring at least one image from a camera
- 408: step of determining concatenated data based on casting the plurality of lidar data sets and the plurality of radar data sets to the at least one image
- 410: step of detecting an object based on the concatenated data

- 500: computer system according to various embodiments
- 502: processor
- 504: memory
- 506: non-transitory data storage
- 508: camera
- 510: lidar sensor
- 512: radar sensor
- 514: connection

## Claims

1. Computer implemented method for object detection,
the method comprising the following steps carried out by computer hardware components:
- acquiring a plurality of lidar data sets from a lidar sensor;
- acquiring a plurality of radar data sets from a radar sensor;
- acquiring at least one image from a camera;
- determining concatenated data based on casting the plurality of lidar data sets and the plurality of radar data sets to the at least one image; and
- detecting an object based on the concatenated data.

2. The computer implemented method of claim 1, further comprising the following step carried out by the computer hardware components:
determining a plurality of camera residual blocks.

3. The computer implemented method of at least one of claims 1 or 2,
wherein the camera data is processed using a first artificial neural network.

4. The computer implemented method of at least one of claims 1 to 3,
wherein the casting comprises aligning a plurality of sweeps of the lidar data sets.

5. The computer implemented method of at least one of claims 1 to 4,
further comprising the following step carried out by the computer hardware components:
carrying out linear depth completion of the lidar data sets.

6. The computer implemented method of at least one of claims 1 to 5,
further comprising the following step carried out by the computer hardware components:
determining a plurality of lidar residual blocks based on the linear depth completed lidar data.

7. The computer implemented method of at least one of claims 1 to 6,
wherein the lidar data sets are processed using a second artificial neural network.

8. The computer implemented method of at least one of claims 1 to 7,
wherein the casting comprises aligning a plurality of sweeps of the plurality of radar data sets.

9. The computer implemented method of at least one of claims 1 to 8,
further comprising the following step carried out by the computer hardware components:
determining a plurality of radar residual blocks.

10. The computer implemented method of at least one of claims 1 to 9,
wherein the radar data is processed using a third artificial neural network.

11. The computer implemented method of at least one of claims 1 to 10, further comprising the following step carried out by the computer hardware components:
concatenating the plurality of camera residual blocks, the plurality of lidar residual blocks, and the plurality of radar residual blocks

12. Computer system, the computer system comprising a plurality of computer hardware components configured to carry out steps of the computer implemented method of at least one of claims 1 to 11.

13. Vehicle, comprising a radar sensor, a lidar sensor and a camera, wherein the vehicle is configured to detect objects according to the computer implemented method of at least one of claims 1 to 11.

14. Non-transitory computer readable medium comprising instructions for carrying out the computer implemented method of at least one of claims 1 to 11.
